# EUROPÄISCHE PATENTSCHRIFT

(11) **EP 4 151 867 B1**
(45) Veröffentlichungstag und Bekanntmachung des Hinweises auf die Patenterteilung: **05.06.2024**
(21) Anmeldenummer: 21197542.0
(22) Anmeldetag: 17.09.2021
(51) Int. Cl.: F16B 21/06, A45C 13/10, A45C 13/30

(54) **BEFESTIGUNGSVORRICHTUNG, BEHÄLTER UND VERFAHREN ZUR HERSTELLUNG EINES BEHÄLTERS**
FIXING DEVICE, CONTAINER AND METHOD FOR PRODUCING A CONTAINER
DISPOSITIF DE FIXATION, RÉCIPIENT ET PROCÉDÉ DE FABRICATION D'UN RÉCIPIENT

(43) Veröffentlichungstag der Anmeldung: 22.03.2023
(73) Patentinhaber: Rotho Kunststoff AG, 5303 Würenlingen (CH)
(72) Erfinder: Christian, Thoma, 79774 Albbruck (DE)
(74) Vertreter: LBP Lemcke, Brommer & Partner Patentanwälte mbB

(56) Entgegenhaltungen:
- US-A- 3 417 438
- US-A1- 2017 198 738
- US-A1- 2018 310 657

## Beschreibung

Die Erfindung betrifft eine Befestigungsvorrichtung nach dem Oberbegriff des Anspruchs 1, sowie einen Behälter mit einer solchen Befestigungsvorrichtung nach dem Oberbegriff des Anspruchs 7. Weiterhin betrifft die Erfindung ein Verfahren zur Herstellung eines Behälters.

Ein Behälter der vorliegenden Art weist einen Aufnahmeraum auf, der zumindest durch eine Wand umschlossen ist, sowie wenigstens ein Halteelement zum Anheben des Aufnahmeraums und eine das Halteelement an dem Aufnahmeraum festlegende Befestigungsvorrichtung mit wenigstens einem in eine Durchgangsöffnung in der Wand eingreifenden Befestigungselement.

In der EP 3 524 542 A1 ist ein solcher Behälter in Form eines Korbs mit einem Aufnahmeraum und einem daran drehbar befestigten Halteelement beschrieben. Das Halteelement ist als Riemen ausgeführt, der an einer Wand des Aufnahmeraums befestigt ist. Ein Hohlzylinder des Riemens ist in eine ebenfalls als Hohlzylinder ausgebildete Öffnung an der Wand eingesteckt und mittels eines Knopfs mit der Wand drehbar verbunden. Der Behälter ist mitsamt dem Halteelement aus spritzgegossenem Kunststoff hergestellt, wobei die Wand des Aufnahmeraums und das Halteelement separat gefertigt und anschließend miteinander verbunden werden. Dokument US2018/310 657 A1 offenbart eine Befestigungsvorrichtung gemäß dem Oberbegriff des Anspruchs 1.

Eine Befestigungsvorrichtung der eingangs genannten Art kann, außer zur Befestigung eines Halteelements an einem Behälter, zu den verschiedensten Zwecken verwendet werden, wie zum Beispiel zum Befestigen eines Griffs an einer Schublade, zum Anbringen eines Deckels an einem Behälter, zum Verbinden zweier plattenförmigen Elemente und vieles mehr.

Die Aufgabe der vorliegenden Erfindung liegt darin, die Befestigungsvorrichtung einfach und kostengünstig an einem plattenförmigen Element, insbesondere einer Wand anzubringen, um einen Gegenstand an dem plattenförmigen Element, insbesondere ein Halteelement an dem Aufnahmeraum eines Behälters befestigen zu können und ihn hierbei drehbar mit dem plattenförmigen Element, insbesondere der Wand des Aufnahmeraums zu verbinden. Eine weitere Aufgabe ist, einen Behälter kostengünstig auszuführen. Die Anzahl an Bauteilen des Behälters soll verringert werden. Die Herstellung des Behälters, insbesondere die Montage des Halteelements an der Wand des Aufnahmeraums, soll schneller und einfacher durchführbar sein.

Wenigstens eine dieser Aufgaben wird durch eine Befestigungsvorrichtung mit den Merkmalen des Anspruchs 1 und durch einen Behälter mit den Merkmalen des Anspruchs 7 gelöst.

Die Befestigungsvorrichtung zeichnet sich zusätzlich zur Tatsache, dass es wenigstens ein in eine Durchgangsöffnung im plattenförmigen Element eingreifendes Befestigungselement umfasst, dadurch aus, dass das Befestigungselement ein Spreizelement umfasst, das in einem ersten Zustand in eine erste axiale Richtung durch die Durchgangsöffnung führbar ist und in einem zweiten Zustand gegenüber dem plattenförmigen Element zumindest in eine der ersten axialen Richtung entgegengesetzte zweite axiale Richtung festgelegt ist, wobei ein zur Umschaltung von dem ersten in den zweiten Zustand innerhalb des Befestigungselements und gegenüber diesem bewegbares und den zweiten Zustand sicherndes Betätigungselement angeordnet ist. Dadurch kann die Befestigungsvorrichtung ein Halteelement oder einen sonstigen Gegenstand einfach und kostengünstig an einem plattenförmigen Element, insbesondere an einem Aufnahmeraum eines Behälters befestigen, insbesondere drehbar mit dessen Wand verbinden.

Eine Hauptfunktion des vorgeschlagenen Betätigungselements der erfindungsgemäßen Befestigungsvorrichtung ist die Sicherung des zweiten Zustands, also des fertigen Montagezustands. Dies bietet den großen Vorteil, dass kein separates Sicherungselement von der anderen Seite der Durchgangsöffnung her an der Befestigungsvorrichtung angebracht werden muss, um den zweiten Zustand zu sichern.

Mit einer erfindungsgemäßen Befestigungsvorrichtung kann die Anzahl an Bauteilen des erfindungsgemäßen Behälters verringert werden.

Wenigstens eine dieser Aufgaben wird außerdem durch ein Verfahren mit den Merkmalen nach Anspruch 9 gelöst.

Vorteilhafte Ausgestaltungen der erfindungsgemäßen Befestigungsvorrichtung finden sich in den Ansprüchen 2 bis 6; eine bevorzugte Ausgestaltung des erfindungsgemäßen Behälters nennt Anspruch 8; bevorzugte Weiterbildungen des erfindungsgemäßen Verfahrens sind in Anspruch 10 niedergelegt.

Der erfindungsgemäße Behälter kann zur Aufnahme von Lebewesen, körperlichen Gegenständen, Flüssigkeiten oder Gasen eingerichtet sein. Der Behälter kann eine Tasche, ein Korb oder ein Eimer sein. Der Behälter kann einen Deckel aufweisen. Der Behälter ist, wie insbesondere auch das Halteelement, vorzugsweise als Spritzgussteil aus Kunststoff gefertigt. Der Aufnahmeraum kann abhängig von dem erforderlichen Stauraum eine unterschiedliche Größe aufweisen. Die Wand des Behälters, kann aus einer Seitenwand und einer Bodenwand gebildet sein.

Das plattenförmige Element, insbesondere die Wand des Behälters, kann aus Kunststoff und/oder Metall bestehen, oder auch aus anderen Materialien, wie zum Beispiel Holz, Holzwerkstoffen oder Karton.

Das Halteelement des Behälters kann ein Henkel, ein Tragriemen, ein Griff und/oder ein Bügel sein. Das Halteelement ist drehbar an dem Aufnahmeraum festgelegt. An dem Aufnahmeraum können wenigstens zwei derartige Halteelemente angeordnet sein. Das Halteelement kann aus Kunststoff und/oder Metall aufgebaut sein. Das Halteelement kann an einer dem Aufnahmeraum gegenüberliegenden Außenseite der Wand angeordnet sein, um eine besonders leichte Montierbarkeit sicherzustellen.

Die Durchgangsöffnung kann kreisrund ausgeführt sein. Die Durchgangsöffnung kann als Lagerauge für das Halteelement wirken. Die Durchgangsöffnung kann eine Zentralachse aufweisen, um die das Halteelement gegenüber der Durchgangsöffnung drehbar ist.

Das Befestigungselement kann mit dem Halteelement fest verbunden, bevorzugt einteilig ausgeführt, sein. Das Spreizelement kann mit dem Halteelement fest verbunden, bevorzugt einteilig ausgeführt, sein. Das Befestigungselement kann aus Kunststoff und/oder Metall aufgebaut sein.

Das Befestigungselement und/oder das Halteelement ist am plattentförmigen Element, insbesondere an der Wand drehbar und axial gesichert aufgenommen. Das Betätigungselement und/oder das Befestigungselement kann drehsymmetrisch ausgeführt sein.

Das Betätigungselement kann aus Kunststoff und/oder Metall aufgebaut sein. Erfindungsgemäß ist das Betätigungselement gegenüber dem Befestigungselement von einer ersten Position, bei der der erste Zustand eingerichtet ist zu einer zweiten Position, bei der der zweite Zustand eingerichtet ist, entlang der ersten axialen Richtung bewegbar ist. Die erste Position kann eine Verliersicherung für das Betätigungselement an dem Befestigungselement bilden. Dies verringert die Anzahl der Einzelteile, die bei der Montage des Halteelements am plattenförmigen Element, insbesondere am Aufnahmeraum des Behälters gehandhabt werden müssen, in äußerst vorteilhafter Weise.

Die Umschaltung von der ersten Position zu der zweiten Position erfolgt durch eine Bewegung des Betätigungselements in die erste axiale Richtung.

Das Betätigungselement kann wenigstens einen Vorsprung aufweisen, der bei der ersten Position in wenigstens eine Aussparung in dem Befestigungselement eingreift und/oder bei der zweiten Position in wenigstens eine Aussparung oder eine weitere Aussparung eingreift und eine Sicherung zumindest in die zweite axiale Richtung bewirkt. Alternativ oder zusätzlich kann die Aussparung in dem Betätigungselement und der Vorsprung in dem Befestigungselement ausgeführt sein. Der Vorsprung und/oder die Aussparung kann ringförmig ausgeführt sein. Bei der ersten und/oder zweiten Position kann das Betätigungselement an dem Befestigungselement, bevorzugt über den Vorsprung und die Aussparung eingerastet, eingeklemmt oder eingeschnappt sein.

Die Aussparung und/oder der Vorsprung kann in dem Spreizelement des Befestigungselements ausgeführt sein.

Das Betätigungselement kann das Spreizelement zumindest in der zweiten Position beaufschlagen, insbesondere auseinanderdrücken. Das Betätigungselement kann in der zweiten Position an dem Spreizelement anliegen und eine Bewegung des Spreizelements in den ersten Zustand unterbinden.

Eine Bewegung des Betätigungselements gegenüber dem Befestigungselement in die zweite axiale Richtung kann unterbunden sein. Zumindest kann ein Kraftaufwand zur Bewegung des Betätigungselements gegenüber dem Befestigungselement in die zweite axiale Richtung größer sein als die größte bei der Handhabung und Lagerung des Behälters anzunehmende darauf einwirkende Kraft.

Bei einer bevorzugten Ausführung der Erfindung ist es vorteilhaft, wenn das Betätigungselement zur Umschaltung auf die zweite Position von einer dem Spreizelement in Bezug auf das plattenförmige Element, insbesondere auf die Wand, abgewandten Seite ausgehend betätigbar ist. Dadurch kann die Befestigung des Halteelements ausschließlich von einer Seite des plattenförmigen Elements, insbesondere der Wand, ohne mehrere Einzelteile zusammenführen zu müssen, erfolgen.

Erfindungsgemäß ist eine erste Betätigungskraft auf das Betätigungselement zum Durchstecken des Spreizelements durch die Durchgangsöffnung bei in der ersten Position befindlichem Betätigungselement geringer ist als eine zweite Betätigungskraft auf das Betätigungselement zur Umschaltung auf die zweite Position ausgehend von der ersten Position. Dadurch kann die Montage des Halteelements oder sonstigen Gegenstands durch Aufbringen und anschließendes Erhöhen der Betätigungskraft erfolgen. Die erste und zweite Betätigungskraft können in die erste axiale Richtung wirken.

Bei einer vorzugsweisen Ausführung der Erfindung ist vorgesehen, dass das Spreizelement wenigstens einen biegbaren, bevorzugt elastisch biegbaren, Anlagebereich aufweist, der bei dem zweiten Zustand gegenüber dem plattenförmigen Element, insbesondere der Wand in Bezug auf die zweite axiale Richtung formschlüssig festgelegt ist. Dadurch kann das Spreizelement zuverlässig in die zweite axiale Richtung am plattenförmigen Element, insbesondere an der Wand gesichert werden. Der Anlagebereich kann wenigstens eine, bevorzugt zwei, insbesondere drei oder vier Haltekrallen aufweisen. Die Haltekrallen können kreisförmig um eine Zentralachse des Spreizelements angeordnet sein. Die Haltekrallen können umfangsseitig zumindest abschnittsweise voneinander getrennt sein. Die Haltekrallen können sich abhängig von dem Zustand des Spreizelements in Bezug auf die Zentralachse radial bewegen. Die Haltekrallen können in radialer Richtung elastisch ausgeführt sein. Die Haltekrallen können sich bei der ersten Position nach radial innen bewegen. In der zweiten Position können die Haltekrallen in einer Bewegung nach radial innen durch das Betätigungselement beschränkt sein.

Der Anlagebereich kann das plattenförmige Element, insbesondere die Wand hintergreifen und damit das Spreizelement in die zweite axiale Richtung am plattenförmigen Element, insbesondere an der Wand sichern.

Das Betätigungselement kann in der zweiten Position eine Bewegung der Haltekrallen nach radial innen beschränken oder die Haltekrallen nach radial außen drücken.

Erfindungsgemäß ist das Betätigungselement an dem Befestigungselement bei dem ersten Zustand eingerastet ist und eine Bewegung des Betätigungselements innerhalb des Befestigungselements zur Umschaltung von dem ersten in den zweiten Zustand gehemmt ist. Dadurch kann ein unbeabsichtigtes Umschalten, insbesondere während das Befestigungselement in dem ersten Zustand durch die Durchgangsöffnung geführt wird, verhindert werden. Die Bewegungshemmung kann durch eine kraft-, reib- und/oder formschlüssige Verbindung zwischen dem Betätigungselement und dem Befestigungselement umgesetzt werden.

Eine bevorzugte Ausgestaltung der Erfindung ist vorteilhaft, bei der das Betätigungselement ein Kopfelement aufweist, das dem Spreizelement in Bezug auf das plattenförmige Element, insbesondere in Bezug auf die Wand, axial gegenüberliegt. Dadurch kann das Halteelement an dem Betätigungselement gesichert werden. Das Kopfelement kann das Betätigungselement an dem Befestigungselement in die erste axiale Richtung sichern.

Das Kopfelement kann fest mit dem Betätigungselement verbunden sein. Das Kopfelement kann einteilig mit dem Betätigungselement ausgeführt sein. Die Betätigungskraft kann auf das Kopfelement eingeleitet werden. Das Kopfelement kann ein Druckknopf sein. An das Kopfelement kann sich ein zylindrischer oder konischer Bereich anschließen, der das Spreizelement biegt und/oder den ersten Zustand des Spreizelements unterbindet.

Weiterhin wird wenigstens eine der zuvor angegebenen Aufgaben durch ein Verfahren zur Herstellung eines Behälters mit den Merkmalen nach Anspruch 9 gelöst.

Bei einer bevorzugten Ausführung der Erfindung ist es vorteilhaft, wenn die erste und zweite Betätigungskraft auf das Betätigungselement von einer dem Spreizelement in Bezug auf die Wand abgewandten Seite ausgehend aufgebracht wird. Dadurch kann das Halteelement von einer Seite der Wand ausgehend an dem Aufnahmeraum befestigt werden.

Weitere Vorteile und vorteilhafte Ausgestaltungen der Erfindung ergeben sich aus der Figurenbeschreibung und den Abbildungen.

Ein Ausführungsbeispiel für die Erfindung wird im Folgenden unter Bezugnahme auf die Abbildungen ausführlich beschrieben. Es zeigen im Einzelnen:
- Figur 1:: Einen Behälter in einer speziellen Ausführungsform der Erfindung.
- Figur 2:: Eine räumliche Ansicht einer Befestigungsvorrichtung in einer speziellen Ausführungsform der Erfindung bei einem ersten Zustand.
- Figur 3:: Eine weitere räumliche Ansicht der Befestigungsvorrichtung aus Figur 2.
- Figur 4:: Eine Figur 2 entsprechende räumliche Ansicht der Befestigungsvorrichtung bei einem zweiten Zustand.
- Figur 5:: Eine Figur 3 entsprechende räumliche Ansicht der Befestigungsvorrichtung bei dem zweiten Zustand.
- Figur 6:: Einen Querschnitt der Befestigungsvorrichtung aus Figur 2.
- Figur 7:: Einen Querschnitt der Befestigungsvorrichtung aus Figur 4.

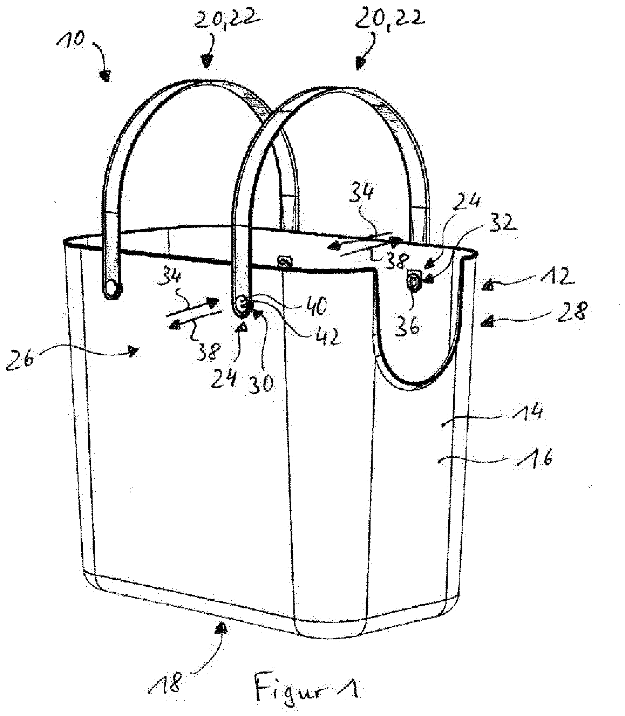

Figur 1 zeigt einen Behälter in einer speziellen Ausführungsform der Erfindung. Der Behälter 10 ist in Form eines Tragekorbs ausgebildet, zur Aufnahme von insbesondere körperlichen Gegenständen eingerichtet und umfasst einen Aufnahmeraum 12, der zumindest durch eine Wand 14 umschlossen ist, die aus einer umlaufend geschlossenen Seitenwand 16 und einer Bodenwand 18 gebildet ist. An der Wand 14 sind zwei Halteelemente 20 zum Anheben des Aufnahmeraums 12 befestigt. Die Halteelemente 20 sind bevorzugt als Tragriemen 22 ausgeführt, die jeweils über eine Befestigungsvorrichtung 24 auf einer Seite 26 der Wand 14 und eine weitere Befestigungsvorrichtung 24 auf einer gegenüberliegenden Seite 28 der Wand 14 drehbar befestigt sind. Die Halteelemente 20 erstrecken sich jeweils bogenförmig von der einen Seite 26 auf die gegenüberliegende Seite 28 der Wand 14.

Die Wand 14 weist für die einzelne Befestigungsvorrichtung 24 eine Durchgangsöffnung 30 auf, in die ein Befestigungselement 32 der Befestigungsvorrichtung 24 entlang einer ersten axialen Richtung 34 durchführbar ist und eingreift. Das Befestigungselement 32 umfasst ein Spreizelement 36, das gegenüber der Wand 14 zumindest in eine der ersten axialen Richtung 34 entgegengesetzte zweite axiale Richtung 38 festgelegt ist und damit das Halteelement 20 an der Wand 14 in die zweite axiale Richtung 38 sichert. Auf einer dem Spreizelement 36 in Bezug auf die Wand 14 gegenüberliegenden Seite weist die Befestigungsvorrichtung 24 ein Betätigungselement 40 mit einem Kopfelement 42 auf, das das Halteelement 20 an dem Betätigungselement 40 sichert.

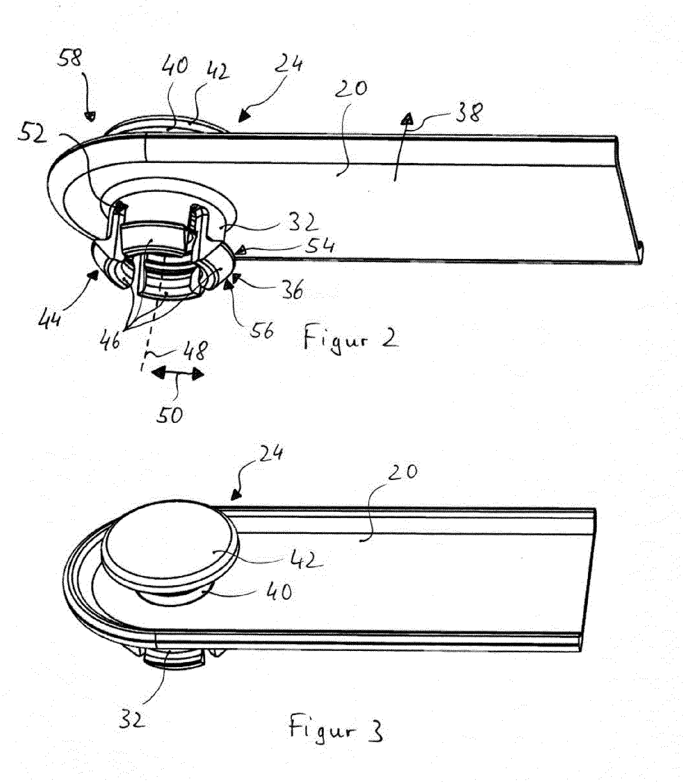

Figur 2 zeigt eine räumliche Ansicht einer Befestigungsvorrichtung in einer speziellen Ausführungsform der Erfindung bei einem ersten Zustand. Die Befestigungsvorrichtung 24 umfasst das Befestigungselement 32 mit dem Spreizelement 36 und das innerhalb des Spreizelements 36 und gegenüber diesem bewegbar angeordnete Betätigungselement 40 mit dem bevorzugt einteilig damit ausgeführten Kopfelement 42. Das Befestigungselement 32 ist einteilig mit dem Halteelement 20 ausgeführt. Das Spreizelement 36 ist einteilig mit dem Befestigungselement 32 ausgeführt und weist einen biegbaren Anlagebereich 44 mit insgesamt vier Haltekrallen 46 auf. Die Haltekrallen 46 sind kreisförmig um eine Zentralachse 48 des Spreizelements 36 angeordnet und umfangsseitig zumindest abschnittsweise voneinander getrennt. Die Haltekrallen 46 sind in radialer Richtung 50 elastisch ausgeführt und können sich in Bezug auf die Zentralachse 48 radial bewegen.

Das Befestigungselement 32 weist einen bis auf die umfangsseitigen Aussparungen zylindrischen Bereich 52 auf, dessen Außendurchmesser gleich oder kleiner wie ein Durchmesser der hier nicht abgebildeten Durchgangsöffnung ist.

Hingegen ist ein die vier Haltekrallen 46 kreisförmig umgebender gedachter Außendurchmesser des größten Außenumfangs 54 größer als der Durchmesser der Durchgangsöffnung. Der Anlagebereich 44 kann beim Einführen des Befestigungselements 32 in die Durchgangsöffnung zusammengedrückt werden, wodurch sich die vier Haltekrallen 46 nach radial innen in Richtung zu der Zentralachse 48 bewegen und damit die Durchgangsöffnung durchdringen können und sich auf einer dem Kopfelement 42 gegenüberliegenden Seite der Wand wieder von der nach radial innen ausgelenkten Stellung nach radial außen bewegen, wodurch der Anlagebereich 44 die Wand hintergreift und das Halteelement 20 in die zweite axiale Richtung 38 an der Wand sichert.

Die Haltekrallen 46 sind in einem stirnseitigen Bereich 56 abgeschrägt, um beim Einführen in die Durchgangsöffnung die Bewegung nach radial innen zu bewirken. Der Anlagebereich 44 hingegen ist auf einer der Wand zugeordneten Seite bevorzugt planparallel zu der Wand.

Das Spreizelement 36 ist hier in einem ersten Zustand abgebildet, bei dem das Spreizelement 36 durch die Durchgangsöffnung in der Wand führbar ist, da sich die Haltekrallen 46 radial nach innen bewegen können, um den gedachten Außendurchmesser des größten Außenumfangs 54 zumindest auf den Durchmesser der Durchgangsöffnung verkleinern zu können. Das Betätigungselement 40 ist dabei gegenüber dem Befestigungselement 32 in einer ersten Position 58, bei der dieses in dem Befestigungselement 32 zur Umsetzung einer Verliersicherung eingerastet ist. Das Betätigungselement 40 ist somit vormontiert in dem Befestigungselement 32 aufgenommen.

Figur 3 zeigt eine weitere räumliche Ansicht der Befestigungsvorrichtung aus Figur 2. Die Befestigungsvorrichtung 24 weist das Betätigungselement 40 mit dem einteilig damit ausgeführten Kopfelement 42 auf. Das Kopfelement 42 sichert das Halteelement 20 an dem Betätigungselement 40, das bewegbar innerhalb von dem Befestigungselement 32 aufgenommen ist.

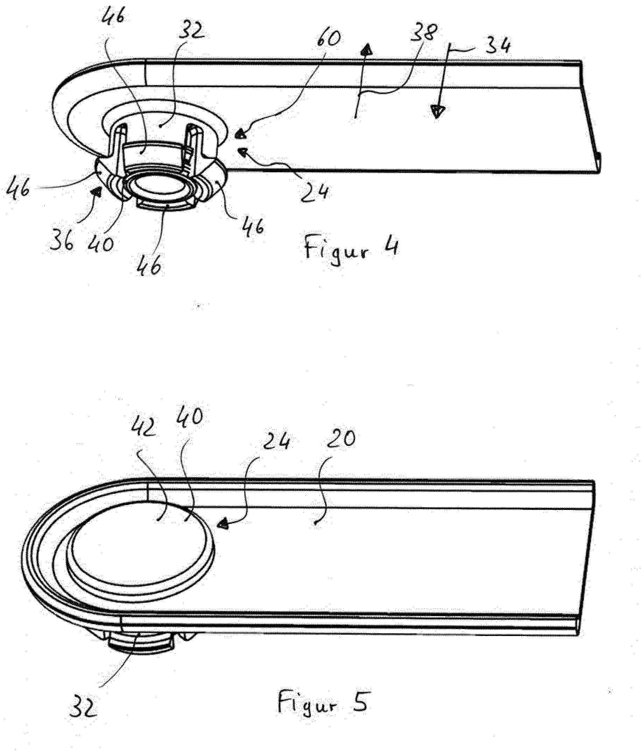

Figur 4 zeigt eine Figur 2 entsprechende räumliche Ansicht der Befestigungsvorrichtung bei einem zweiten Zustand. Die Befestigungsvorrichtung 24 ist mit dem Spreizelement 36 in einem zweiten Zustand abgebildet, bei dem das Betätigungselement 40 gegenüber dem Befestigungselement 32 in der zweiten Position 60 ist. In der zweiten Position 60 beschränkt das Betätigungselement 40 eine Bewegung der Haltekrallen 46 nach radial innen, wodurch der zweite Zustand, bei dem das Spreizelement 36 gegenüber der hier nicht abgebildeten Wand in die zweite axiale Richtung 38 gesichert ist, festgelegt ist.

Das Betätigungselement 40 ist zur Einnahme der zweiten Position 60 ausgehend von der ersten Position, wie in Figur 2 gezeigt, innerhalb von dem Befestigungselement 32 entlang der ersten axialen Richtung 34 bewegbar und ist wie hier dargestellt in der zweiten Position 60 eingerastet.

Figur 5 zeigt eine Figur 3 entsprechende räumliche Ansicht der Befestigungsvorrichtung bei dem zweiten Zustand. Die Befestigungsvorrichtung 24 weist das Befestigungselement 32 und das Betätigungselement 40 mit dem daran einteilig ausgeführten Kopfelement 42 auf, das an dem Halteelement 20 anliegt und dieses an dem Betätigungselement 40 sichert.

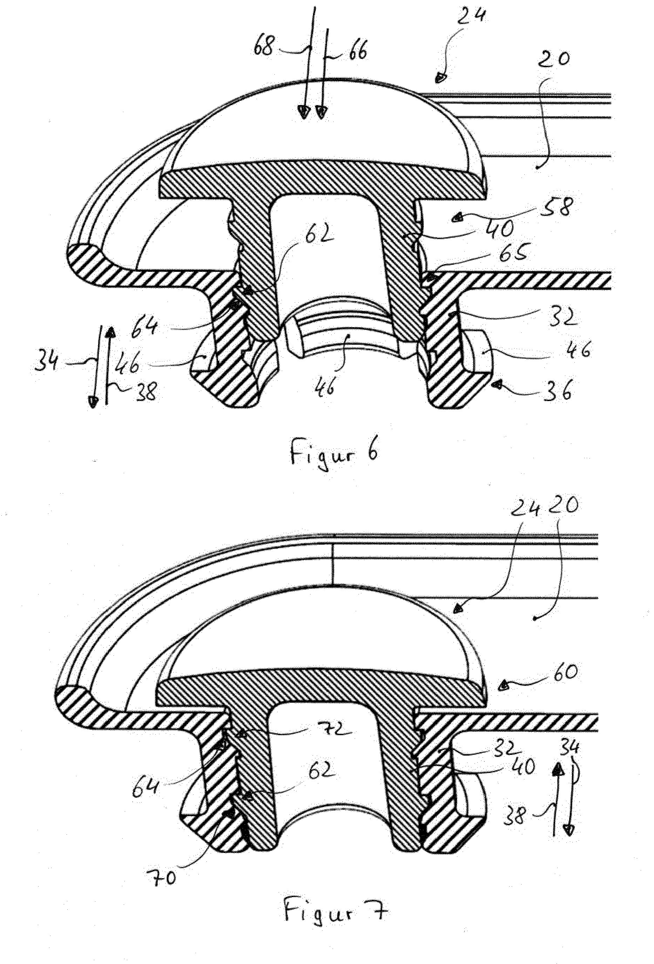

Figur 6 zeigt einen Querschnitt der Befestigungsvorrichtung aus Figur 2. Die Befestigungsvorrichtung 24 umfasst das einteilig mit dem Halteelement 20 ausgeführte Befestigungselement 32 mit dem daran wiederum einteilig ausgeführten Spreizelement 36 mit den vier umfangsseitig beabstandet voneinander angeordneten Haltekrallen 46. Das Betätigungselement 40 ist innerhalb des Befestigungselements 32 bewegbar aufgenommen und hier in der ersten Position 58, bei der der erste Zustand an dem Spreizelement 36 geschaltet ist.

Mit der ersten Position 58 ist eine Verliersicherung des Betätigungselements 40 an dem Befestigungselement 32 gebildet und das Betätigungselement 40 ist an dem Befestigungselement 32 vormontiert. Das Betätigungselement 40 weist einen ringförmigen ersten Vorsprung 62 auf, der in eine erste Aussparung 64 in dem Befestigungselement 32 eingreift und damit eine erste Rastposition bildet, bei der eine weitere Bewegung des Betätigungselements 40 in die zweite Position entlang der ersten axialen Richtung 34 gehemmt ist.

Der erste Vorsprung 62 ist in Richtung zu dem Spreizelement 36 abgeschrägt, wodurch die Bewegung entlang der ersten axialen Richtung 34 gehemmt aber möglich ist. Eine Bewegung in die zweite axiale Richtung 38 wird hingegen durch einen Absatz 65 an dem ersten Vorsprung 62 unterbunden, der die erste Aussparung 64 in dem Befestigungselement 32 hintergreift. Eine Bewegung des Betätigungselements 40 in die zweite axiale Richtung 38 ist somit nicht zerstörungsfrei möglich.

Eine erste Betätigungskraft 66 auf das Betätigungselement 40 zum Durchstecken des Spreizelements 36 durch die Durchgangsöffnung der Wand bei in der ersten Position 58 befindlichem Betätigungselement 40 ist bevorzugt geringer als eine zweite Betätigungskraft 68 auf das Betätigungselement 40 zur Umschaltung auf die zweite Position ausgehend von der ersten Position 58. Dadurch kann ein ungewolltes Umschalten auf die zweite Position beim Durchstecken des Spreizelements 36 unterbunden werden.

Figur 7 zeigt einen Querschnitt der Befestigungsvorrichtung aus Figur 4. Die Befestigungsvorrichtung 24 mit dem in der zweiten Position 60 eingestellten Betätigungselement 40 ist an der hier nicht abgebildeten Wand in die zweite axiale Richtung 38 gesichert. In der zweiten Position 60 ist das Betätigungselement 40 in die erste axiale Richtung 34 gegenüber der ersten Position aus Figur 6 weiterbewegt und der ringförmige erste Vorsprung 62 ist in einer weiteren in die erste axiale Richtung 34 zu der ersten Aussparung 64 versetzten zweiten Aussparung 70 eingreifend und in einer zweiten Rastposition. Dabei weist das Betätigungselement 40 einen weiteren zweiten Vorsprung 72 auf, der in die erste Aussparung 64 in dem Befestigungselement 32 eingreift. Dadurch ist eine doppelte Sicherung des Betätigungselements 40 gegenüber dem Befestigungselement 32 umgesetzt und das Betätigungselement 40 ist zuverlässig und stabil in dem Befestigungselement 32 eingesetzt. Dadurch kann das Halteelement 20 zuverlässig und dauerhaft an der Wand gesichert werden.

### Bezugszeichenliste:

| | | | |
|---|---|---|---|
| 10 | Behälter | 48 | Zentralachse |
| 12 | Aufnahmeraum | 50 | radiale Richtung |
| 14 | Wand | 52 | zylindrischer Bereich |
| 16 | Seitenwand | 54 | Außenumfang |
| 18 | Bodenwand | 56 | stirnseitiger Bereich |
| 20 | Halteelement | 58 | erste Position |
| 22 | Tragriemen | 60 | zweite Position |
| 24 | Befestigungsvorrichtung | 62 | erster Vorsprung |
| 26 | Seite | 64 | erste Aussparung |
| 28 | Seite | 65 | Absatz |
| 30 | Durchgangsöffnung | 66 | erste Betätigungskraft |
| 32 | Befestigungselement | 68 | zweite Betätigungskraft |
| 34 | ersten axialen Richtung | 70 | zweite Aussparung |
| 36 | Spreizelement | 72 | zweiter Vorsprung |
| 38 | zweite axiale Richtung | | |
| 40 | Betätigungselement | | |
| 42 | Kopfelement | | |
| 44 | Anlagebereich | | |
| 46 | Haltekralle | | |

## Patentansprüche

1. Befestigungsvorrichtung (24) zum Anbringen eines Halteelements (20) oder Gegenstands an einem plattenförmigen Element mit einer Durchgangsöffnung (30), insbesondere an einer Wand (14) eines Behälters, wobei die Befestigungsvorrichtung (24) zum drehbaren Festlegen des Halteelements (20) oder Gegenstands am plattenförmigen Element, insbesondere der Wand (14) vorgesehen ist und wenigstens ein in eine Durchgangsöffnung (30) im plattenförmigen Element eingreifendes Befestigungselement (32) umfasst, wobei das Befestigungselement (32) ein Spreizelement (36) umfasst, das in einem ersten Zustand in eine erste axiale Richtung (34) durch die Durchgangsöffnung (30) führbar ist und in einem zweiten Zustand gegenüber dem plattenförmigen Element zumindest in eine der ersten axialen Richtung (34) entgegengesetzte zweite axiale Richtung (38) festgelegt ist, wobei ein zur Umschaltung von dem ersten in den zweiten Zustand, innerhalb des Befestigungselements (32) und gegenüber diesem bewegbares und den zweiten Zustand sicherndes Betätigungselement (40) angeordnet ist, und wobei das Betätigungselement (40) gegenüber dem Befestigungselement (32) von einer ersten Position (58), bei der der erste Zustand eingerichtet ist zu einer zweiten Position (60), bei der der zweite Zustand eingerichtet ist, entlang der ersten axialen Richtung (34) bewegbar ist,
**dadurch gekennzeichnet,**
**dass** das Betätigungselement (40) an dem Befestigungselement (32) bei dem ersten Zustand eingerastet ist und eine Bewegung des Betätigungselements (40) innerhalb des Befestigungselements (32) zur Umschaltung von dem ersten in den zweiten Zustand gehemmt ist, und dass eine erste Betätigungskraft (66) auf das Betätigungselement (40) zum Durchstecken des Spreizelements (36) durch die Durchgangsöffnung (30) bei in der ersten Position (58) befindlichem Betätigungselement (40) geringer ist als eine zweite Betätigungskraft (68) auf das Betätigungselement (40) zur Umschaltung auf die zweite Position (60) ausgehend von der ersten Position (58).

2. Befestigungsvorrichtung (24) nach Anspruch 1, **dadurch gekennzeichnet, dass** das Betätigungselement (40) zur Umschaltung auf die zweite Position (60) von einer dem Spreizelement (36) in Bezug auf das plattenförmige Element abgewandten Seite ausgehend betätigbar ist.

3. Befestigungsvorrichtung (24) nach einem der vorangehenden Ansprüche, **dadurch gekennzeichnet, dass** das Spreizelement (36) wenigstens einen biegbaren Anlagebereich (44) aufweist, der bei dem zweiten Zustand gegenüber dem plattenförmigen Element in Bezug auf die zweite axiale Richtung (38) formschlüssig festgelegt ist.

4. Befestigungsvorrichtung (24) nach Anspruch 3, **dadurch gekennzeichnet, dass** das Spreizelement (36) mit einer oder mehreren, elastisch verformbaren Haltekrallen (46) versehen ist und das Betätigungselement (40) in der zweiten Position (60) eine elastische Verformung der Haltekrallen (46) zumindest weitgehend verhindert.

5. Befestigungsvorrichtung (24) nach einem der vorangehenden Ansprüche, **dadurch gekennzeichnet, dass** das Betätigungselement (40) ein Kopfelement (42) aufweist, das dem Spreizelement (36) in Bezug auf das plattenförmige Element axial gegenüberliegt.

6. Befestigungsvorrichtung (24) nach einem der vorangehenden Ansprüche, **dadurch gekennzeichnet, dass** es als Spritzgussteil aus Kunststoff gefertigt ist.

7. Behälter (10) aufweisend
einen Aufnahmeraum (12), der zumindest durch eine Wand (14) umschlossen ist,
wenigstens ein Halteelement (20) zum Anheben des Aufnahmeraums (12), und eine das Halteelement (20) an dem Aufnahmeraum (12) drehbar festlegende Befestigungsvorrichtung mit wenigstens einem in eine Durchgangsöffnung (30) in der Wand (14) eingreifenden Befestigungselement (32),
**dadurch gekennzeichnet, dass**
die Befestigungsvorrichtung eine Befestigungsvorrichtung (24) nach mindestens einem der Ansprüche 1 bis 6 ist.

8. Behälter (10) nach Anspruch 7, **dadurch gekennzeichnet, dass** zumindest das Halteelement (20) als Spritzgussteil aus Kunststoff gefertigt ist.

9. Verfahren zur Herstellung eines Behälters (10) mit einem zumindest durch eine Wand (14) umschlossenen Aufnahmeraum (12) und einem Halteelement (20) zum Anheben des Aufnahmeraums (12), wobei das Halteelement (20) an dem Aufnahmeraum (12) drehbar befestigt wird, indem ein Befestigungselement (32) einer Befestigungsvorrichtung (24) in eine Durchgangsöffnung (30) in der Wand (14) entlang einer ersten axialen Richtung (34) eingeführt wird, während ein innerhalb des Spreizelements (36) und gegenüber diesem bewegbar angeordnetes Betätigungselement (40) eine erste Position (58) gegenüber dem Befestigungselement (32) einnimmt und dabei das Spreizelement (36) einen ersten Zustand aufweist und anschließend das Betätigungselement (40) entlang der ersten axialen Richtung (34) in eine zweite Position (60) bewegt wird und dabei einen zweiten Zustand des Spreizelements (36) schaltet und sichert, bei dem dieses gegenüber der Wand (14) zumindest in eine der ersten axialen Richtung (34) entgegengesetzte zweite axiale Richtung (38) festlegt ist,
**dadurch gekennzeichnet,**
**dass** durch eine erste Betätigungskraft (66) auf das in der ersten Position (58) befindliche Betätigungselement (40) das Spreizelement (36) durch die Durchgangsöffnung (30) gesteckt wird und anschließend bei durchgestecktem Spreizelement (36) durch eine größere zweite Betätigungskraft (68) auf das Betätigungselement (40) die zweite Position (60) geschaltet wird.

10. Verfahren zur Herstellung eines Behälters (10) nach Anspruch 9, **dadurch gekennzeichnet, dass** die erste und zweite Betätigungskraft (66, 68) auf das Betätigungselement (40) von einer dem Spreizelement (36) in Bezug auf die Wand (14) abgewandten Seite ausgehend aufgebracht wird.

## Claims

1. Fixing device (24) for mounting a holding element (20) or object to a plate-shaped element with a through-opening (30), in particular to a wall (14) of a container, wherein the fixing device (24) is provided for the rotatable fixing of the holding element (20) or object to the plate-shaped element, in particular the wall (14) and comprises at least one fixing element (32) engaging into a through-opening (30) in the plate-shaped element, wherein the fixing element (32) comprises a spreading element (36) which in a first state can be guided in a first axial direction (34) through the through-opening (30) and in a second state is fixed at least in a second axial direction (38), opposite to the first axial direction (34), with respect to the plate-shaped element, wherein an actuating element (40) for switching from the first into the second state is arranged within the fixing element (32), movable with respect thereto and securing the second state, and wherein the actuating element (40) is movable with respect to the fixing element (32) from a first position (58) in which the first state is configured to a second position (60) in which the second state is configured, along the first axial direction (34),
**characterised in**
**that** the actuating element (40) is snapped in at the fixing element (32) in the first state and a movement of the actuating element (40) within the fixing element (32) for switching from the first into the second state is inhibited, and that a first actuating force (66) on the actuating element (40) for plugging the spreading element (36) through the through-opening (30) when the actuating element (40) is in the first position (58) is less than a second actuating force (68) on the actuating element (40) for switching to the second position (60) starting from the first position (58).

2. Fixing device (24) according to claim 1, **characterised in that** the actuating element (40) for switching to the second position (60) can be actuated starting from a side facing away from the spreading element (36) in relation to the plate-shaped element.

3. Fixing device (24) according to any of the preceding claims, **characterised in that** the spreading element (36) has at least one bendable bearing region (44), which in the second state is fixed in a form-fitting manner with respect to the plate-shaped element in relation to the second axial direction (38).

4. Fixing device (24) according to claim 3, **characterised in that** the spreading element (36) is equipped with one or several elastically deformable holding claws (46), and the actuating element (40) in the second position (60) prevents at least substantially an elastic deformation of the holding claws (46).

5. Fixing device (24) according to any of the preceding claims, **characterised in that** the actuating element (40) has a head element (42) which is positioned axially opposite to the spreading element (36) in relation to the plate-shaped element.

6. Fixing device (24) according to any of the preceding claims, **characterised in that** it is produced as an injection-moulded part made of plastic.

7. Container (10) having a receiving space (12) which is surrounded at least by a wall (14),
at least one holding element (20) for lifting the receiving space (12) and a fixing device, which fixes the holding element (20) rotatably to the receiving space (12), with at least one fixing element (32) engaging into a through-opening (30) in the wall (14),
**characterised in that**
the fixing device is a fixing device (24) according to at least one of claims 1 to 6.

8. Container (10) according to claim 7, **characterised in that** at least the holding element (20) is produced as an injection-moulded part made of plastic.

9. Method for producing a container (10) with a receiving space (12) surrounded at least by a wall (14) and a holding element (20) for lifting the receiving space (12), wherein the holding element (20) is fastened rotatably to the receiving space (12), in that a fixing element (32) of a fixing device (24) is introduced into a through-opening (30) in the wall (14) along a first axial direction (34), while an actuating element (40) arranged within the spreading element (36) and movable with respect thereto assumes a first position (58) with respect to the fixing element (32) and in this regard the spreading element (36) has a first state and subsequently the actuating element (40) is moved along the first axial direction (34) into a second position (60) and in this regard switches to and locks a second state of the spreading element (36), in which this is fixed with respect to the wall (14) at least in a second axial direction (38) opposite to the first axial direction (34),
**characterised in**
**that** by a first actuating force (66) on the actuating element (40) positioned in the first position (58), the spreading element (36) is plugged through the through-opening (30) and subsequently when the spreading element (36) has been plugged through, a switch is made to the second position by a larger second actuating force (68) on the actuating element (40).

10. Method for producing a container (10) according to claim 9, **characterised in that** the first and second actuating forces (66, 68) are applied to the actuating element (40) starting from a side facing away from the spreading element (36) in relation to the wall (14).

## Revendications

1. Dispositif de fixation (24) pour le montage d'un élément de retenue (20) ou objet au niveau d'un élément en forme de plaque avec une ouverture traversante (30), en particulier au niveau d'une paroi (14) d'un récipient, dans lequel le dispositif de fixation (24) est prévu pour la fixation rotative de l'élément de retenue (20) ou objet au niveau de l'élément en forme de plaque, en particulier de la paroi (14) et comprend au moins un élément de fixation (32) venant en prise dans une ouverture traversante (30) dans l'élément en forme de plaque, dans lequel l'élément de fixation (32) comprend un élément d'écartement (36) qui peut être guidé dans un premier état dans une première direction axiale (34) par l'ouverture traversante (30) et est fixé dans un second état au moins dans une seconde direction axiale (38) opposée à la première direction axiale (34) par rapport à l'élément en forme de plaque, dans lequel, pour le passage du premier au second état, un élément d'actionnement (40) est agencé à l'intérieur de l'élément de fixation (32), mobile par rapport à celui-ci et fixant le second état, et dans lequel l'élément d'actionnement (40) est mobile par rapport à l'élément de fixation (32) d'une première position (58), pour laquelle le premier état est configuré, vers une seconde position (60), pour laquelle le second état est configuré, le long de la première direction axiale (34),
**caractérisé en ce que**
l'élément d'actionnement (40) est encliqueté au niveau de l'élément de fixation (32) dans le premier état et un mouvement de l'élément d'actionnement (40) à l'intérieur de l'élément de fixation (32) est entravé pour le passage du premier au second état, et **en ce qu'**une première force d'actionnement (66) sur l'élément d'actionnement (40) pour l'enfichage de l'élément d'écartement (36) par l'ouverture traversante (30) lorsque l'élément d'actionnement (40) se trouve dans la première position (58) est inférieure à une seconde force d'actionnement (68) sur l'élément d'actionnement (40) pour le passage à la seconde position (60) à partir de la première position (58).

2. Dispositif de fixation (24) selon la revendication 1, **caractérisé en ce que** l'élément d'actionnement (40) peut être actionné pour le passage à la seconde position (60) à partir d'un côté éloigné de l'élément d'écartement (36) en relation avec l'élément en forme de plaque.

3. Dispositif de fixation (24) selon l'une quelconque des revendications précédentes, **caractérisé en ce que** l'élément d'écartement (36) présente au moins une zone d'appui (44) pliable qui dans le second état est fixée par complémentarité de formes par rapport à l'élément en forme de plaque en relation avec la seconde direction axiale (38).

4. Dispositif de fixation (24) selon la revendication 3, **caractérisé en ce que** l'élément d'écartement (36) est pourvu d'une ou plusieurs griffes de retenue (46) déformables élastiquement, et l'élément d'actionnement (40) dans la seconde position (60) empêche au moins largement une déformation élastique des griffes de retenue (46).

5. Dispositif de fixation (24) selon l'une quelconque des revendications précédentes, **caractérisé en ce que** l'élément d'actionnement (40) présente un élément de tête (42) qui fait face axialement à l'élément d'écartement (36) en relation avec l'élément en forme de plaque.

6. Dispositif de fixation (24) selon l'une quelconque des revendications précédentes, **caractérisé en ce qu'**il est fabriqué comme partie moulée par injection en matière plastique.

7. Récipient (10) présentant un espace de réception (12) qui est entouré au moins par une paroi (14),
au moins un élément de retenue (20) pour lever l'espace de réception (12) et un dispositif de fixation fixant de manière rotative l'élément de retenue (20) au niveau de l'espace de réception (12) avec au moins un élément de fixation (32) venant en prise dans une ouverture traversante (30) dans la paroi (14),
**caractérisé en ce que**
le dispositif de fixation est un dispositif de fixation (24) selon au moins l'une quelconque des revendications 1 à 6.

8. Récipient (10) selon la revendication 7, **caractérisé en ce qu'**au moins l'élément de retenue (20) est fabriqué comme partie moulée par injection en matière plastique.

9. Procédé de fabrication d'un récipient (10) avec un espace de réception (12) entouré au moins par une paroi (14) et un élément de retenue (20) pour lever l'espace de réception (12), dans lequel l'élément de retenue (20) est fixé de manière rotative au niveau de l'espace de réception (12) en ce qu'un élément de fixation (32) d'un dispositif de fixation (24) est introduit dans une ouverture traversante (30) dans la paroi (14) le long d'une première direction axiale (34), pendant qu'un élément d'actionnement (40) agencé de manière mobile à l'intérieur de l'élément d'écartement (36) et par rapport à celui-ci occupe une première position (58) par rapport à l'élément de fixation (32) et l'élément d'écartement (36) présente un premier état et ensuite l'élément d'actionnement (40) est déplacé dans une seconde position (60) le long de la première direction axiale (34) et passe dans et fixe ainsi un second état de l'élément d'écartement (36) dans lequel celui-ci est fixé par rapport à la paroi (14) au moins dans une seconde direction axiale (38) opposée à la première direction axiale (34),
**caractérisé en ce que**
l'élément d'écartement (36) est enfiché par l'ouverture traversante (30) par une première force d'actionnement (66) sur l'élément d'actionnement (40) se trouvant dans la première position (58) et ensuite, lorsque l'élément d'écartement (36) a été enfiché, un passage vers la seconde position (60) est réalisé par une seconde force d'actionnement (68) supérieure sur l'élément d'actionnement (40).

10. Procédé de fabrication d'un récipient (10) selon la revendication 9, **caractérisé en ce que** les première et seconde forces d'actionnement (66, 68) sont appliquées sur l'élément d'actionnement (40) à partir d'un côté éloigné de l'élément d'écartement (36) en relation avec la paroi (14).
